# EUROPEAN PATENT APPLICATION

(11) **EP 4 718 615 A2**
(43) Date of publication of application: **01.04.2026**
(21) Application number: 25198821.8
(22) Date of filing: 28.08.2025
(51) Int. Cl.: H01M 50/383, H01M 10/0587

(54) **SECONDARY BATTERY**

(30) Priority: 09.09.2024 KR 20240122197
(71) Applicant: SAMSUNG SDI CO., LTD., Yongin-si, Gyeonggi-do 17084 (KR)
(72) Inventor: OH, Seotaek, 17084 Yongin-si (KR)
(74) Representative: Marks & Clerk LLP

(57) **Abstract**

A secondary battery including an electrode assembly, a case in which the electrode assembly is accommodated, a cap assembly covering an opening of the case, and a fire-extinguishing member accommodated inside the case, the fire-extinguishing member in contact with the cap assembly.

## Description

### BACKGROUND

### 1. Field

Embodiments relate to a secondary battery.

### 2. Description of the Related Art

A secondary battery can be charged and discharged, unlike a primary battery that cannot be recharged. Low-capacity secondary batteries may be used in small portable electronic devices, e.g., smartphones, feature phones, laptop computers, digital cameras, or camcorders, and high-capacity secondary batteries may be used as motor-driving power sources, power-storing batteries, or the like, for hybrid vehicles, electric vehicles, or the like.

### SUMMARY

Embodiments are directed to a secondary battery including an electrode assembly, a case in which the electrode assembly is accommodated, a cap assembly covering an opening of the case, and a fire-extinguishing member accommodated inside the case, the fire-extinguishing member in contact with the cap assembly.

The cap assembly may include a cap plate and an insulating member between the cap plate and the electrode assembly, a fire-extinguishing fluid inlet may be in one area of the cap plate, and the fire-extinguishing fluid inlet may be in communication with the fire-extinguishing member.

The fire-extinguishing member may be accommodated inside the case by passing through the insulating member.

The fire-extinguishing member may include a tubular shell.

The tubular shell may include low-density polyethylene, high-density polyethylene, or ultra-high molecular weight polyethylene.

The fire-extinguishing member may be filled with a fire-extinguishing fluid.

The fire-extinguishing fluid may include a filling agent and a fire-extinguishing capsule.

The filling agent may include silica, calcium carbonate, melamine, carbon black, calcium sulfate, barium sulfate, barium carbonate, strontium carbonate, magnesium carbonate, strontianite, iron oxide, aluminium oxide, magnesium hydroxide, aluminium hydroxide, diatomaceous earth, talc, wollastonite, semi-hardened clay, gypsum, clay, kaolin, barite, wolframite, or silicate.

Embodiments are directed to a secondary battery including an electrode assembly, a case in which the electrode assembly is accommodated, a cap plate covering an opening of the case, an insulating member between the electrode assembly and the cap plate, and at least one fire-extinguishing member between the insulating member and the cap plate.

A fire-extinguishing fluid inlet may be in one area of the cap plate, and the fire-extinguishing fluid inlet may be in communication with the fire-extinguishing member.

The fire-extinguishing member may include a polyhedral shell.

An opening corresponding to the fire-extinguishing fluid inlet may be on one surface of the polyhedral shell.

The fire-extinguishing member may include a fire-extinguishing fluid.

The fire-extinguishing fluid may include a filling agent and a fire-extinguishing capsule.

The fire-extinguishing capsule may include a core-shell structure.

At least some of the above and other features of the invention are set out in the claims.

### BRIEF DESCRIPTION OF THE DRAWINGS

Features will become apparent to those of skill in the art by describing in detail embodiments with reference to the attached drawings in which:
FIG. 1 is a perspective view schematically showing an example of a secondary battery according to an embodiment of the present disclosure;
FIG. 2 is an exploded perspective view schematically showing an example of the secondary battery of FIG. 1;
FIG. 3 is a perspective view schematically showing an example of a fire-extinguishing member of FIG. 2;
FIG. 4 is a plan view schematically showing an example of an electrode assembly of FIG. 2;
FIG. 5 is an exploded perspective view schematically showing another embodiment of the present disclosure;
FIG. 6 is a perspective view schematically showing an example of a fire-extinguishing member of FIG. 5; and
FIG. 7 is an exploded perspective view schematically showing yet another embodiment of the present disclosure

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

If used herein, "comprise, include" and/or "comprising, including" specify mentioned shapes, numbers, steps, operations, members, components, and/or presence of these groups, and do not exclude the presence or addition of one or more different shapes, numbers, operations, members, components, and /or groups.

To help understanding of the present disclosure, the accompanying drawings are not shown according to the actual scale, but the dimensions of some components may be exaggerated. The same reference numeral may be given to the same component in different embodiments.

Although first, second, etc., may be used to describe various components, these components are not limited by these terms. These terms are only used to distinguish one component from other components, and unless specifically stated to the contrary, a first component may be a second component.

Throughout the specification, unless specially stated to the contrary, each component may be singular or plural.

If a component is arranged on "a top portion (or a bottom portion)" of another component or "on (or under)" the other component, it may mean not only a case where the component is arranged adjacent to a top surface (or a bottom surface) of the other component, but also a case where another component may be interposed between the other component and the component arranged on (or under) the other component.

If a component is described as being "connected", "coupled", or "connected" to another component, it should be understood that the components are directly connected or connectable to each other, but another component may be "interposed" between the components, or the components may be "connected", "coupled", or "connected" to each other through another component. If a portion is electrically coupled to another portion, this may include not only a case where they are directly connected to each other, but also a case where they are connected with another element therebetween.

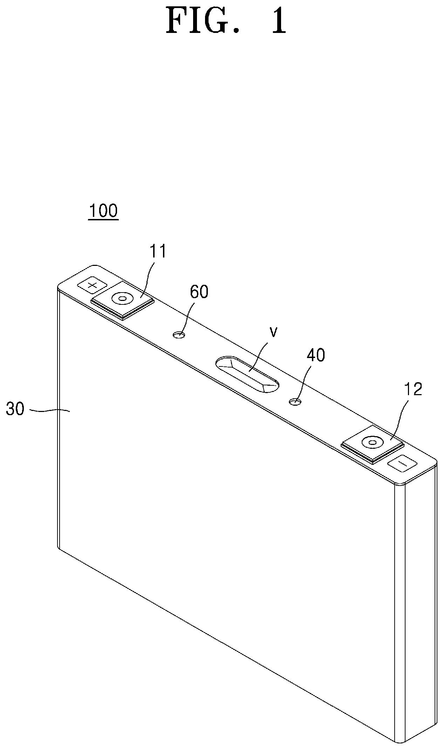

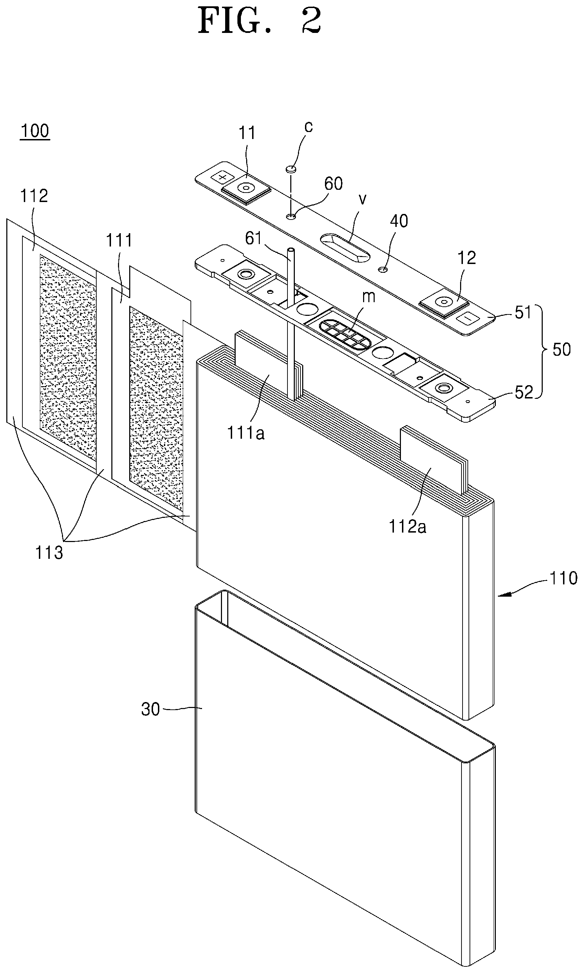

FIG. 1 is a perspective view schematically showing an example of a secondary battery according to an embodiment of the present disclosure, and FIG. 2 is an exploded perspective view schematically showing an example of the secondary battery of FIG. 1.

Referring to FIGS. 1 and 2, a secondary battery 100 according to the current embodiment may include, e.g., at least one electrode assembly 110 wound with a separator 113 as an insulator (e.g., the separator 113 may include an electrically insulating material) between a positive electrode 111 and a negative electrode 112, a case 30 in which the electrode assembly 110 may be housed, and a cap assembly 50 coupled to an opening of the case 30. For example, the cap assembly 50 may seal and close an upper portion of the case 30. The secondary battery 100 further includes a fire-extinguishing member 61 inside of the case 30.

The secondary battery 100 according to the current embodiment may be, e.g., a lithium ion secondary battery of a prismatic type. However, the present disclosure may be applied to various types of batteries such as lithium polymer batteries or cylindrical batteries.

The electrode assembly 110 may be wound after interposing the separator 113, which may be an insulator (e.g., may include an electrically insulating material) between the positive electrode 111 and the negative electrode 112. In this case, the positive electrode 111 may include, e.g., a positive tab 111a electrically connected to a positive uncoated portion, and the negative electrode 112 may include, e.g., a negative tab 112a electrically connected to a negative uncoated portion, for electrical connection to positive and negative terminals 11 and 12. For example, the positive electrode 111 and the negative electrode 112 may be, respectively, electrically connected the positive terminal 11 and the negative terminal 12 through positive tab 111a and negative tab 112a

The case 30 may form the overall appearance of the secondary battery 100 and may include, e.g., a conductive metal such as aluminium, an aluminium alloy, or nickel-plated steel. The case 30 includes a space in which the electrode assembly 110 is accommodated.

The cap assembly 50 may include, e.g., a cap plate 51 covering the opening of the case 30, and the case 30 and the cap plate 51 may be made of a conductive material. In an implementation, the positive and negative terminals 11 and 12 electrically connected to the positive electrode 111 or the negative electrode 112 may protrude outwardly through the cap plate 51.

In some embodiments, the cap plate 51 may be made of a thin plate and may be coupled to the opening of the case 30 and the cap plate 51 may include, e.g., an electrolyte inlet 40, which may include a sealing stopper, and a vent portion v with a notch.

In an embodiment, an insulating member 52 is between the electrode assembly 110 and the cap plate 51.

In an implementation, the cap plate 51 may include, in addition to the electrolyte inlet 40 and the vent portion v, an opening. The opening may be, e.g., a fire-extinguishing fluid inlet 60 for injecting a fire-extinguishing fluid into the fire-extinguishing member 61. The fire-extinguishing fluid inlet 60 may be in communication with (e.g., be connected to) the fire-extinguishing member 61. For example, the fire-extinguishing fluid inlet 60 may be connected to and in fluid communication with the fire-extinguishing member 61 in such a way that fluid may flow from the fire-extinguishing fluid inlet 60 to the fire-extinguishing member 61. In an implementation, the location of the fire-extinguishing fluid inlet 60 may correspond to an opening located in one area of the insulating member 52. In an implementation, the insulating member 52 may include a mesh portion m at a position corresponding to the vent portion v located in the cap plate 51, and the opening may be located in one of step portions located on both sides of the mesh portion m. In an implementation, the location of the fire-extinguishing fluid inlet 60 may correspond to (e.g. overlap with) the opening located in the step portion.

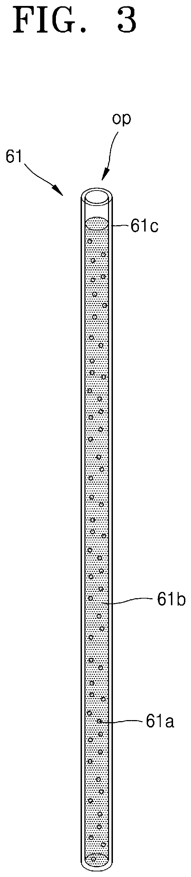

FIG. 3 is a perspective view schematically showing an example of a fire-extinguishing member of FIG. 2.

Referring to FIG. 3, the fire-extinguishing member 61 may include, e.g., an opening op at one end of a tubular shell 61c so as to be in communication with (e.g., be connected to) the fire-extinguishing fluid inlet 60. As the tubular shell 61c may have a long length, the tubular shell 61c may pass through an opening in the step portion of the insulating member 52 and be placed inside the case 30. In an implementation, the case 30 may accommodate the electrode assembly 110 wound therein, such that the fire-extinguishing member 61 may be housed in a space in one area of the electrode assembly 110.

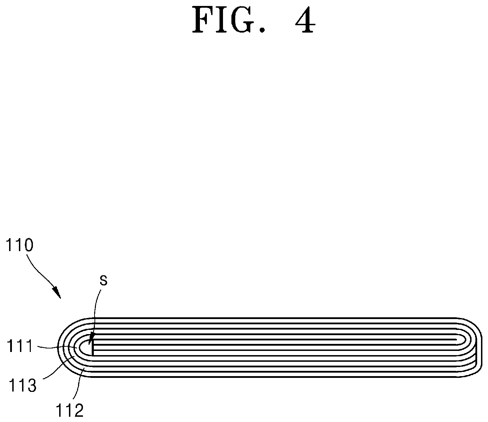

FIG. 4 is a plan view schematically showing an example of an electrode assembly of FIG. 2.

Referring to FIG. 4, the wound electrode assembly 110 may be wound with the separator 113 between the positive electrode 111 and the negative electrode 112, and the empty space s may be defined in one end of the electrode assembly 110 where the winding begins, such that the fire-extinguishing member 61 including the tubular shell 61c may be accommodated in the empty space s.

Referring back to FIG. 3, the fire-extinguishing member 61 may be filled with a fire-extinguishing fluid which may include a fire-extinguishing capsule 61a and a filling agent 61b.

The fire-extinguishing fluid may be filled through the fire-extinguishing fluid inlet 60 on the cap plate 51, and when the fire-extinguishing fluid is fully filled in the fire-extinguishing member 61, the fire-extinguishing fluid inlet 60 may be sealed by being stopped (e.g., plugged) with a stopper c. In an implementation, the stopper c may have a screw form, and a cross shape may be on one surface of the stopper c such that the stopper c may be easily opened and closed using a tool.

In an implementation, the fire-extinguishing capsule 61a included in the fire-extinguishing fluid may include a core-shell structure. In an implementation, a core of the fire-extinguishing capsule 61a may include a fire-extinguishing agent that may include, e.g., fluorocarbons, chlorofluorocarbons, bromofluorocarbons, iodofluorocarbons, 2-iodine-1,1,1,2,3,3,3-heptafluoropropane (HFC-227ea) and iodofluorocarbon (FIC-217I1 or FIC-13I1), 1,1,1,2,2-pentafluoroethane (CF₃CF₂H, HFC-125), 1,1,1,2,3,3,3-heptafluoropropane (CF₃CHFCF₃), chlorotetrafluoroethane (CHClFCF₃), fluorine-based ketone compounds, dodecafluoro-2-methylpentan-3-one (FK-5-1-12, CF₃CF₂C(O)CF(CF₃)₂), 1-chloro-1,2,2,2-tetrafluoroethane (C₂HClF₄), 2-chloro-1,1,1,2-tetrafluoroethane (CHClFCF₃, HCFC-124), decafluorocyclohexanone (perfluorocyclohexanone), 1,1,1,2,4,4,5,5,5-nonafluoro-2-trifluoromethyl-butan-3-one (CF₃CF₂C(O)CF(CF₃)₂), 1,1,1,2,4,5,5,5,6,6,6,-octafluoro-2,4,-bis(trifluororomethyl)pentan-3-one ((CF₃)₂CFC(O)CF(CF₃)₂), CF₃CF₂C(O)CF₂CF₂CF₃, CF₃C(O)CF(CF₃)₂, 1,1,1,3,3,4,4,5,5,6,6,7,7,8,8,8,-hexadodecafluorooctan-2-one (CF₃CF₂CF₂CF₂CF₂CF₂C(O)CF₃), 1,1,1,3,4,4,4,-heptafluoro-3-trifluoromethylbutan-2-one (CF₃C(O)CF(CF₃)₂), 1,1,1,2,4,4,5,5,-octafluoro-2-trifluoromethylpentane-3-one (HCF₂CF₂C(O)CF(CF₃)₂), 1,1,1,2,4,4,5,5,6,6,6,-undecafluoro-2-trifluoromethylhexan-3-one (CF₃CF₂CF₂C(O)CF(CF₃)₂), 1-chloro-,1,1,3,4,4,4-hexafluoro-3-trifluoromethyl-butan-2-one ((CF₃)₂CFC(O)CF₂Cl), 1,1,1,2,2,4,4,5,5,6,6,6-dodecafluorohexan-3-one (CF₃CF₂C(O)CF₂CF₂CF₃), 1,1,1,5,5,5,-hexafluoropentane-2-4-dione (CF₃C(O)CH₂C(O)CF₃), 1,1,1,2,5,6,6,6-octafluoro-2,5-bis(trifluoro methyl)hexane-3,4-dione ((CF₃)₂CFC(O)C(O)C(O)CF(CF₃)₂), 1,1,1,2,2,3,3,5,5, 6,6,7,7,7,-tetradecafluoroheptan-4-one (CF₃CF₂CF₂C(O)CF₂CF₂CF₃), 1,1,1,3,3,4,4,4-octafluorobutal-2-one (CF₃C(O)CF₂CF₃), 1,1,2,2,4,5,5,5-octafluoro-1-trifluoromethoxy-4-trifluoromethylpentan-3-one (CF₃OCF₂CF₂C (O)CF(CF₃)₂), or 1,1,1,2,4,4,5,5,6,6,7,7,7,-tridecafluoro-2-trifluoromethylheptan-3-one (CF₃CF₂CF₂CF₂C(O)CF(CF₃)₂), and the shell of the fire-extinguishing capsule 61a may include, e.g., a non-porous high molecular polymer, e.g., polyurethane resin, polyurea resin, polyamide resin, polyester resin, polycarbonate resin, aminoaldehyde resin, melamine resin, polystyrene resin, styrene-acrylate copolymer resin, styrene-methacrylate copolymer resin, gelatin, polyvinylalcohol, phenol formaldehyde resin, or resorcinol formaldehyde resin.

In an implementation, the filling agent 61b included in the fire-extinguishing fluid may include, e.g., silica, calcium carbonate, melamine, carbon black, calcium sulfate, barium sulfate, barium carbonate, strontium carbonate, magnesium carbonate, strontianite, iron oxide, aluminium oxide, magnesium hydroxide, aluminium hydroxide, diatomaceous earth, talc, wollastonite, semi-hardstone, gypsum, clay, kaolin, barite, wolframite, or silicate.

In an implementation, the fire-extinguishing fluid may further include, e.g., a catalyst, a curing retardant, a precipitant, a coagulant, or the like, in addition to the fire-extinguishing capsule 61a and the filling agent 61b.

The catalyst may include, e.g., a platinum compound, the curing retardant may include, e.g., 1-methyl-1-cyclohexanol, 1,1,3,3-tetramethyl-1,3-divinyldisiloxane, 2,4,6,8-tetramethyl-2,4,6,8-tetravinylcyclotetrasiloxane, or 1,3-divinyl-1,1,3,3-tetramethyldisilazane, and the precipitant may include, e.g., potassium acetate, sodium citrate, sodium chloride, ammonium chloride, sodium iodide, potassium iodide, copper sulfate, or sodium thiocyanate, and the coagulant may include, e.g., aluminium sulfate, zinc hydroxide, iron hydroxide, or iron chloride.

The fire-extinguishing member 61 filled with the fire-extinguishing fluid in this way may melt at a temperature of 100 °C to 150 °C if an event (e.g., a fire) occurs in the secondary battery 100, such that the fire-extinguishing fluid therein may flow out and extinguish the fire at an early stage, thereby providing the secondary battery 100 with improved safety.

In an implementation, the fire-extinguishing member 61 may include the tubular shell 61c that may include, e.g., low-density polyethylene (LDPE), high-density polyethylene (HDPE), or ultra-high molecular weight polyethylene (UHMWPE), and may include any material that may melt at a temperature of 100 °C to 150 °C and does not cause problems due to reaction with an electrolyte.

In an implementation, the secondary battery according to an embodiment of the present disclosure may include the fire-extinguishing member filled with a fire-extinguishing fluid therein, such that when an event occurs in the secondary battery, any internal fire may be directly extinguished, thereby improving the stability of the battery.

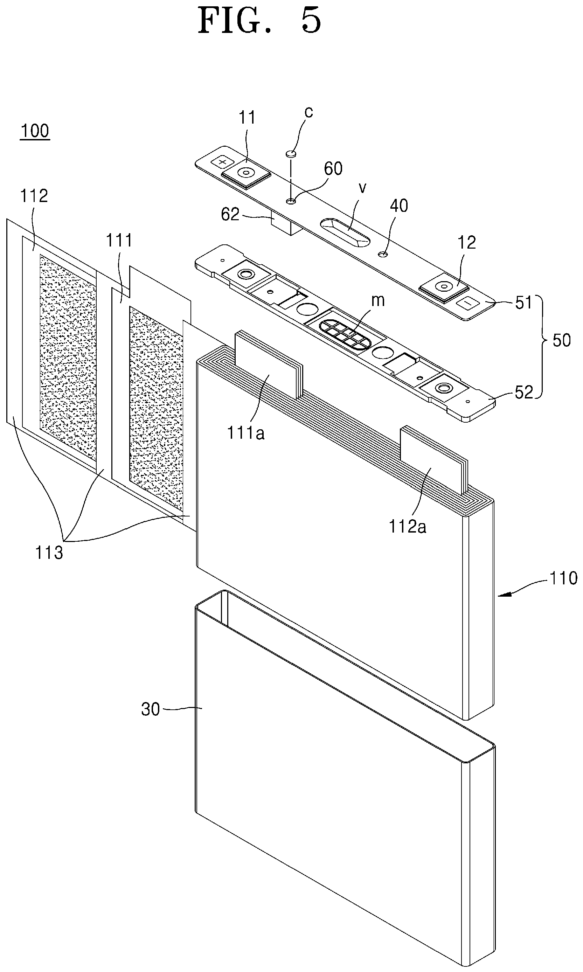

FIG. 5 is an exploded perspective view schematically showing another embodiment of the present disclosure.

Referring to FIG. 5, the secondary battery 100 according to another embodiment may include, e.g., at least one electrode assembly 110 wound with a separator 113 as an insulator (e.g., the separator 113 may include an electrically insulating material) between a positive electrode 111 and a negative electrode 112, a case 30 in which the electrode assembly 110 may be housed, and a cap assembly 50 coupled to an opening of the case 30. For example, the cap assembly 50 may seal and close an upper portion of the case 30. The secondary battery 100 includes a fire-extinguishing member 62 inside the case 30.

The secondary battery 100 according to another embodiment may be, e.g., a lithium ion secondary battery of a prismatic type. However, the present disclosure may be applied to various types of batteries such as lithium polymer batteries or cylindrical batteries.

The electrode assembly 110 may be wound after interposing the separator 113, which may be an insulator, e.g., may include an electrically insulating material, between the positive electrode 111 and the negative electrode 112. In an implementation, the positive electrode 111 may include, e.g., a positive tab 111a electrically connected to a positive uncoated portion, and the negative electrode 112 may include, e.g., a negative tab 112a electrically connected to the negative uncoated portion, for electrical connection to positive and negative terminals 11 and 12. For example, the positive electrode 111 and the negative electrode 112 may be, respectively, electrically connected the positive terminal 11 and the negative terminal 12 through positive tab 111a and negative tab 112a

The case 30 may form the overall appearance of the secondary battery 100 and may include, e.g., a conductive metal such as aluminium, an aluminium alloy, or nickel-plated steel. The case 30 includes a space in which the electrode assembly 110 is accommodated.

The cap assembly 50 may include, e.g., a cap plate 51 covering the opening of the case 30, and the case 30 and the cap plate 51 may be made of a conductive material. In an implementation, the positive and negative terminals 11 and 12 electrically connected to the positive electrode 111 or the negative electrode 112 may protrude outwardly through the cap plate 51.

In some embodiments, the cap plate 51 may be made of a thin plate and may be coupled to the opening of the case 30 and the cap plate 51 may include, e.g., an electrolyte inlet 40, which may include a sealing stopper, and a vent portion v with a notch.

In an implementation, an insulating member 52 is between the electrode assembly 110 and the cap plate 51.

In an implementation, the cap plate 51 may include, in addition to the electrolyte inlet 40 and the vent portion v, an opening. The opening may be, e.g., a fire-extinguishing fluid inlet 60 for injecting a fire-extinguishing fluid into the fire-extinguishing member 62. The fire-extinguishing fluid inlet 60 may be in communication with (e.g., connected to) the fire-extinguishing member 62. For example, the fire-extinguishing fluid inlet 60 may be connected to and in fluid communication with the fire-extinguishing member 62 in such a way that fluid may flow from the fire-extinguishing fluid inlet 60 to the fire-extinguishing member 62. In an implementation, the location of the fire-extinguishing fluid inlet 60 may correspond to an opening located in one area of the insulating member 52. In an implementation, the insulating member 52 may include a mesh portion m at a position corresponding to the vent portion v located in the cap plate 51, and the opening may be located in one of step portions located on both sides of the mesh portion m. In an implementation, the fire-extinguishing fluid inlet 60 may be located on the cap plate 51 in a position that corresponds with (e.g. overlaps with) the location of one of the step portions of the insulating member 52, and the fire-extinguishing member 62 in communication with the fire-extinguishing fluid inlet 60 may be positioned inside of the case 30 in a position corresponding to (e.g., overlapping with) the fire-extinguishing fluid inlet 60.

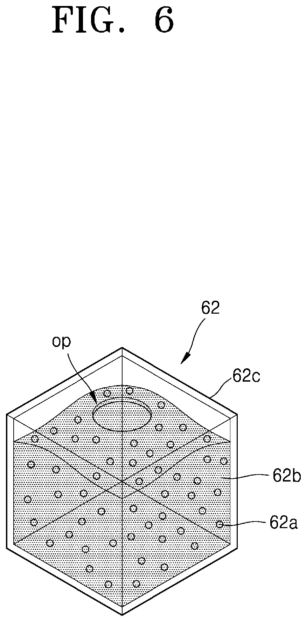

FIG. 6 is a perspective view schematically showing an example of a fire-extinguishing member of FIG. 5.

Referring to FIG. 6, the fire-extinguishing member 62 may include, e.g., an opening op located on one surface of a polyhedral shell 62c so as to be in communication with the fire-extinguishing fluid inlet 60. In some embodiments, the polyhedral shell 62c may have, e.g., a hexahedral shape, and may be on the step portion of the insulating member 52. In an implementation, an opening may be formed in the step portion, such that if an event (e.g., a fire) occurs in the secondary battery 100, the fire-extinguishing member 62 including the polyhedral shell 62c may melt and the fire-extinguishing fluid therein may flow down through the opening in the step portion to the electrode assembly 110.

The fire-extinguishing member 62 may be filled with a fire-extinguishing fluid which may include a fire-extinguishing capsule 62a and a filling agent 62b.

The fire-extinguishing fluid may be filled through the fire-extinguishing fluid inlet 60 on the cap plate 51, and when the fire-extinguishing fluid is fully filled in the fire-extinguishing member 62, the fire-extinguishing fluid inlet 60 may be sealed by being stopped (e.g., plugged) with a stopper c. In an implementation, the stopper c may have a screw form, and a cross shape may be one surface of the stopper c such that the stopper c may be easily opened and closed using a tool.

In an implementation, the fire-extinguishing capsule 62a included in the fire-extinguishing fluid may include a core-shell structure. In an implementation, a core of the fire-extinguishing capsule 62a may include a fire-extinguishing agent that may include, e.g., fluorocarbon, chlorofluorocarbon, bromofluorocarbon, iodofluorocarbon, 2-iodine-1,1,1,2,3,3,3-heptafluoropropane (HFC-227ea) and iodofluorocarbon (FIC-217I1 or FIC-13I1), 1,1,1,2,2-pentafluoroethane (CF₃CF₂H, HFC-125), 1,1,1,2,3,3,3-heptafluoropropane (CF₃CHFCF₃), chlorotetrafluoroethane (CHClFCF₃), fluorine-based ketone compounds, dodecafluoro-2-methylpentan-3-one (FK-5-1-12, CF₃CF₂C(O)CF(CF₃)₂), 1-chloro-1,2,2,2-tetrafluoroethane (C₂HClF₄), 2-chloro-1,1,1,2-tetrafluoroethane (CHClFCF₃, HCFC-124), decafluorocyclohexanone (perfluorocyclohexanone), 1,1,1,2,4,4,5,5,5-nonafluoro-2-trifluoromethyl-butan-3-one (CF₃CF₂C(O)CF(CF₃)₂), 1,1,1,2,4,5,5,5,6,6,6,-octafluoro-2,4,-bis(trifluororomethyl)pentan-3-one ((CF₃)₂CFC(O)CF(CF₃)₂), CF₃CF₂C(O)CF₂CF₂CF₃, CF₃C(O)CF(CF₃)₂, 1,1,1,3,3,4,4,5,5,6,6,7,7,8,8,8,-hexadodecafluorooctan-2-one (CF₃CF₂CF₂CF₂CF₂CF₂C(O)CF₃), 1,1,1,3,4,4,4,-heptafluoro-3-trifluoromethylbutan-2-one (CF₃C(O)CF(CF₃)₂), 1,1,1,2,4,4,5,5,-octafluoro-2-trifluoromethylpentane-3-one (HCF₂CF₂C(O)CF(CF₃)₂), 1,1,1,2,4,4,5,5,6,6,6,-undecafluoro-2-trifluoromethylhexan-3-one (CF₃CF₂CF₂C(O)CF(CF₃)₂), 1-chloro-,1,1,3,4,4,4-hexafluoro-3-trifluoromethyl-butan-2-one ((CF₃)₂CFC(O)CF₂Cl), 1,1,1,2,2,4,4,5,5,6,6,6-dodecafluorohexan-3-one (CF₃CF₂C(O)CF₂CF₂CF₃), 1,1,1,5,5,5,-hexafluoropentane-2-4-dione(CF₃C(O)CH₂C(O)CF₃), 1,1,1,2,5,6,6,6-octafluoro-2,5-bis(trifluoro methyl)hexane-3,4-dione ((CF₃)₂CFC(O)C(O)C(O)CF(CF₃)₂), 1,1,1,2,2,3,3,5,5, 6,6,7,7,7,-tetradecafluoroheptan-4-one (CF₃CF₂CF₂C(O)CF₂CF₂CF₃), 1,1,1,3,3,4,4,4-octafluorobutal-2-one (CF₃C(O)CF₂CF₃), 1,1,2,2,4,5,5,5-octafluoro-1-trifluoromethoxy-4-trifluoromethylpentan-3-one (CF₃OCF₂CF₂C (O)CF(CF₃)₂), or 1,1,1,2,4,4,5,5,6,6,7,7,7,-tridecafluoro-2-trifluoromethylheptan-3-one (CF₃CF₂CF₂CF₂C(O)CF(CF₃)₂), and the shell of the fire-extinguishing capsule 62a may include, e.g., a non-porous high molecular polymer, e.g., polyurethane resin, polyurea resin, polyamide resin, polyester resin, polycarbonate resin, aminoaldehyde resin, melamine resin, polystyrene resin, styrene-acrylate copolymer resin, styrene-methacrylate copolymer resin, gelatin, polyvinylalcohol, phenol formaldehyde resin, or resorcinol formaldehyde resin.

In an implementation, the filling agent 62b included in the fire-extinguishing fluid may include, e.g., silica, calcium carbonate, melamine, carbon black, calcium sulfate, barium sulfate, barium carbonate, strontium carbonate, magnesium carbonate, strontianite, iron oxide, aluminium oxide, magnesium hydroxide, aluminium hydroxide, diatomaceous earth, talc, wollastonite, semi-hardstone, gypsum, clay, kaolin, barite, wolframite, or silicate.

In an implementation, the fire-extinguishing fluid may further include, e.g., a catalyst, a curing retardant, a precipitant, a coagulant, or the like, in addition to the fire-extinguishing capsule 62a and the filling agent 62b.

The catalyst may include, e.g., a platinum compound, the curing retardant may include, e.g., 1-methyl-1-cyclohexanol, 1,1,3,3-tetramethyl-1,3-divinyldisiloxane, 2,4,6,8-tetramethyl-2,4,6,8-tetravinylcyclotetrasiloxane, or 1,3-divinyl-1,1,3,3-tetramethyldisilazane, and the precipitant may include, e.g., potassium acetate, sodium citrate, sodium chloride, ammonium chloride, sodium iodide, potassium iodide, copper sulfate, or sodium thiocyanate, and the coagulant may include, e.g., aluminium sulfate, zinc hydroxide, iron hydroxide, or iron chloride.

The fire-extinguishing member 62 filled with the fire-extinguishing fluid in this way may melt at a temperature of 100 °C to 150 °C if an event (e.g., a fire) occurs in the secondary battery 100, such that the fire-extinguishing fluid therein may flow out and extinguish the fire at an early stage, thereby providing the secondary battery 100 with improved safety.

In an implementation, the fire-extinguishing member 62 may include the polyhedral shell 62c that may include, e.g., low-density polyethylene (LDPE), high-density polyethylene (HDPE), or ultra-high molecular weight polyethylene (UHMWPE), and may include any material that may melt at a temperature of 100 °C to 150 °C and does not cause problems due to reaction with an electrolyte.

In an implementation, the secondary battery according to an embodiment of the present disclosure may include the fire-extinguishing member filled with a fire-extinguishing fluid therein, such that when an event occurs in the secondary battery, any internal fire may be directly extinguished, thereby improving the stability of the battery.

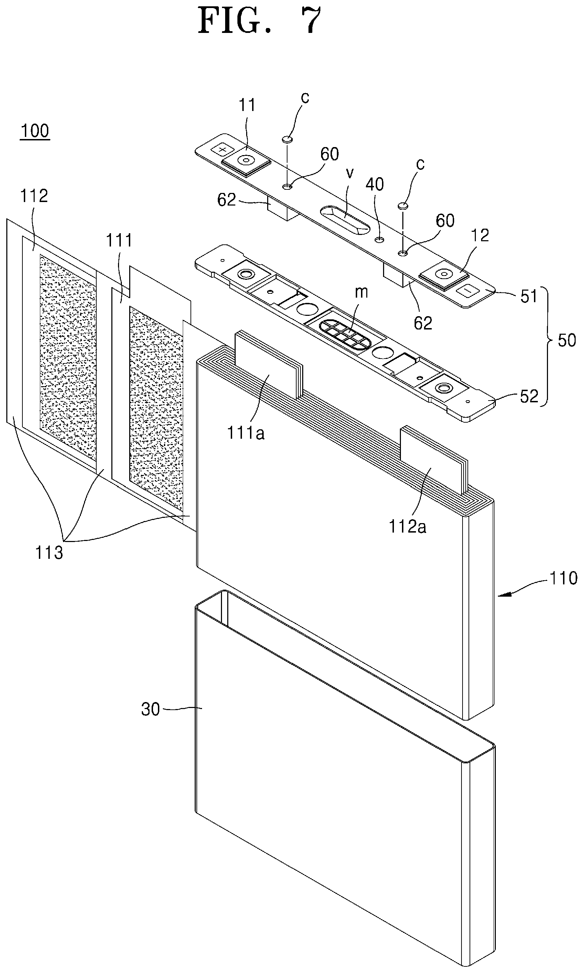

FIG. 7 is an exploded perspective view schematically showing yet another embodiment of the present disclosure.

Referring to FIG. 7, the secondary battery 100 according to yet another embodiment may include, e.g., at least one electrode assembly 110 wound with a separator 113 as an insulator (e.g., the separator 113 may include an electrically insulating material) between a positive electrode 111 and a negative electrode 112, a case 30 in which the electrode assembly 110 may be housed, and a cap assembly 50 coupled to an opening of the case 30. For example, the cap assembly 50 may seal and close an upper portion of the case 30. The secondary battery 100 may further include a plurality of fire-extinguishing members 62 inside the case 30.

The secondary battery 100 according to yet another embodiment may be, e.g., a lithium ion secondary battery of a prismatic type. However, the present disclosure may be applied to various types of batteries such as lithium polymer batteries or cylindrical batteries.

The electrode assembly 110 may be wound after interposing the separator 113, which may be an insulator, e.g., may include an electrically insulating material, between the positive electrode 111 and the negative electrode 112. In an implementation, the positive electrode 111 may include, e.g., a positive tab 111a electrically connected to a positive uncoated portion, and the negative electrode 112 may include, e.g., a negative tab 112a electrically connected to the negative uncoated portion, for electrical connection to positive and negative terminals 11 and 12. For example, the positive electrode 111 and the negative electrode 112 may be, respectively, electrically connected the positive terminal 11 and the negative terminal 12 through positive tab 111a and negative tab 112a

The case 30 may form the overall appearance of the secondary battery 100 and may include, e.g., a conductive metal such as aluminium, an aluminium alloy, or nickel-plated steel. The case 30 includes a space in which the electrode assembly 110 is accommodated.

The cap assembly 50 may include, e.g., a cap plate 51 covering the opening of the case 30, and the case 30 and the cap plate 51 may be made of a conductive material. In an implementation, the positive and negative terminals 11 and 12 electrically connected to the positive electrode 111 or the negative electrode 112 may protrude outwardly through the cap plate 51.

In some embodiments, the cap plate 51 may be made of a thin plate and may be coupled to the opening of the case 30 and the cap plate 51 may include, e.g., an electrolyte inlet 40, which may include a sealing stopper, and a vent portion v with a notch.

In an implementation, an insulating member 52 is between the electrode assembly 110 and the cap plate 51.

In an implementation, the cap plate 51 may include, in addition to the electrolyte inlet 40 and the vent portion v, a plurality of openings. The plurality of openings may be, e.g., a plurality of fire-extinguishing fluid inlets 60 for injecting a fire-extinguishing fluid into the plurality of fire-extinguishing members 62. Each of the plurality of fire-extinguishing fluid inlets 60 may be in communication with (e.g., connected to) one of the plurality of fire-extinguishing members 62. For example, each of the fire-extinguishing fluid inlets 60 may be connected to and in fluid communication with one of the plurality of fire-extinguishing members 62 in such a way that fluid may flow from the fire-extinguishing fluid inlets 60 to the fire-extinguishing members 62. In an implementation, each of the plurality of fire-extinguishing fluid inlets 60 may be located such that it corresponds to (e.g., overlaps with) the location of one of the plurality of openings located in respective areas of the insulating member 52. In an implementation, the insulating member 52 may include a mesh portion m at a position corresponding to the vent portion v located in the cap plate 51, and each of the plurality of openings may be located in a step portion located on both sides of the mesh portion m. In an implementation, two fire-extinguishing fluid inlets 60 may be located on the cap plate 51 each respectively in a position that corresponds with (e.g. overlaps with) one of the step portions located on either side of the mesh portion m, and two fire-extinguishing members 62, each respectively in communication with (e.g., connected to) one of the two fire-extinguishing fluid inlets 60, may each respectively be positioned inside of the case 30 in a position corresponding to (e.g., overlapping with) one of the two of the fire-extinguishing fluid inlets 60.

Referring back to FIG. 6, each of the fire-extinguishing members 62 may include, e.g., an opening op located on one surface of a polyhedral shell 62c so as to be in communication with the respective fire-extinguishing fluid inlet 60. In some embodiments, the polyhedral shell 62c may have, e.g., a hexahedral shape, and may be on the step portion of the insulating member 52. In an implementation, an opening may be formed in each of the step portions, such that if an event (e.g., a fire) occurs in the secondary battery 100, each of the fire-extinguishing members 62 including the polyhedral shell 62c may melt and the fire-extinguishing fluid therein may flow down through the openings in the step portions to the electrode assembly 110.

Each of the fire-extinguishing members 62 may be filled with a fire-extinguishing fluid which may include a fire-extinguishing capsule 62a and a filling agent 62b.

The fire-extinguishing fluid may be filled through the fire-extinguishing fluid inlets 60 on the cap plate 51, and when the fire-extinguishing fluid is fully filled in the fire-extinguishing members 62, each of the fire-extinguishing fluid inlets 60 may be respectively sealed by being stopped (e.g., plugged) with a stopper c. In an implementation, the stopper c may have a screw form, and a cross shape may be one surface of the stopper c such that the stopper c may be easily opened and closed using a tool.

In an implementation, the fire-extinguishing capsule 62a included in the fire-extinguishing fluid may include a core-shell structure. In an implementation, a core of the fire-extinguishing capsule 62a may include a fire-extinguishing agent that may include, e.g., fluorocarbon, chlorofluorocarbon, bromofluorocarbon, iodofluorocarbon, 2-iodine-1,1,1,2,3,3,3-heptafluoropropane (HFC-227ea) and iodofluorocarbon (FIC-217I1 or FIC-13I1), 1,1,1,2,2-pentafluoroethane (CF₃CF₂H, HFC-125), 1,1,1,2,3,3,3-heptafluoropropane (CF₃CHFCF₃), chlorotetrafluoroethane (CHClFCF₃), fluorine-based ketone compounds, dodecafluoro-2-methylpentan-3-one (FK-5-1-12, CF₃CF₂C(O)CF(CF₃)₂), 1-chloro-1,2,2,2-tetrafluoroethane (C₂HClF₄), 2-chloro-1,1,1,2-tetrafluoroethane (CHClFCF₃, HCFC-124), decafluorocyclohexanone (perfluorocyclohexanone), 1,1,1,2,4,4,5,5,5-nonafluoro-2-trifluoromethyl-butan-3-one (CF₃CF₂C(O)CF(CF₃)₂), 1,1,1,2,4,5,5,5,6,6,6,-octafluoro-2,4,-bis(trifluororomethyl)pentan-3-one ((CF₃)₂CFC(O)CF(CF₃)₂), CF₃CF₂C(O)CF₂CF₂CF₃, CF₃C(O)CF(CF₃)₂, 1,1,1,3,3,4,4,5,5,6,6,7,7,8,8,8,-hexadodecafluorooctan-2-one (CF₃CF₂CF₂CF₂CF₂CF₂C(O)CF₃), 1,1,1,3,4,4,4,-heptafluoro-3-trifluoromethylbutan-2-one (CF₃C(O)CF(CF₃)₂), 1,1,1,2,4,4,5,5,-octafluoro-2-trifluoromethylpentane-3-one (HCF₂CF₂C(O)CF(CF₃)₂), 1,1,1,2,4,4,5,5,6,6,6,-undecafluoro-2-trifluoromethylhexan-3-one (CF₃CF₂CF₂C(O)CF(CF₃)₂), 1-chloro-,1,1,3,4,4,4-hexafluoro-3-trifluoromethyl-butan-2-one ((CF₃)₂CFC(O)CF₂Cl), 1,1,1,2,2,4,4,5,5,6,6,6-dodecafluorohexan-3-one (CF₃CF₂C(O)CF₂CF₂CF₃), 1,1,1,5,5,5,-hexafluoropentane-2-4-dione(CF₃C(O)CH₂C(O)CF₃), 1,1,1,2,5,6,6,6-octafluoro-2,5-bis(trifluoro methyl)hexane-3,4-dione ((CF₃)₂CFC(O)C(O)C(O)CF(CF₃)₂), 1,1,1,2,2,3,3,5,5, 6,6,7,7,7,-tetradecafluoroheptan-4-one (CF₃CF₂CF₂C(O)CF₂CF₂CF₃), 1,1,1,3,3,4,4,4-octafluorobutal-2-one (CF₃C(O)CF₂CF₃), 1,1,2,2,4,5,5,5-octafluoro-1-trifluoromethoxy-4-trifluoromethylpentan-3-one (CF₃OCF₂CF₂C (O)CF(CF₃)₂), or 1,1,1,2,4,4,5,5,6,6,7,7,7,-tridecafluoro-2-trifluoromethylheptan-3-one (CF₃CF₂CF₂CF₂C(O)CF(CF₃)₂), and the shell of the fire-extinguishing capsule 62a may include, e.g., a non-porous high molecular polymer, e.g., polyurethane resin, polyurea resin, polyamide resin, polyester resin, polycarbonate resin, aminoaldehyde resin, melamine resin, polystyrene resin, styrene-acrylate copolymer resin, styrene-methacrylate copolymer resin, gelatin, polyvinylalcohol, phenol formaldehyde resin, or resorcinol formaldehyde resin.

In an implementation, the filling agent 62b included in the fire-extinguishing fluid may include, e.g., silica, calcium carbonate, melamine, carbon black, calcium sulfate, barium sulfate, barium carbonate, strontium carbonate, magnesium carbonate, strontianite, iron oxide, aluminium oxide, magnesium hydroxide, aluminium hydroxide, diatomaceous earth, talc, wollastonite, semi-hardstone, gypsum, clay, kaolin, barite, wolframite, or silicate.

In an implementation, the fire-extinguishing fluid may further include, e.g., a catalyst, a curing retardant, a precipitant, a coagulant, or the like, in addition to the fire-extinguishing capsule 62a and the filling agent 62b.

The catalyst may include, e.g., a platinum compound, the curing retardant may include, e.g., 1-methyl-1-cyclohexanol, 1,1,3,3-tetramethyl-1,3-divinyldisiloxane, 2,4,6,8-tetramethyl-2,4,6,8-tetravinylcyclotetrasiloxane, or 1,3-divinyl-1,1,3,3-tetramethyldisilazane, and the precipitant may include, e.g., potassium acetate, sodium citrate, sodium chloride, ammonium chloride, sodium iodide, potassium iodide, copper sulfate, or sodium thiocyanate, and the coagulant may include, e.g., aluminium sulfate, zinc hydroxide, iron hydroxide, or iron chloride.

Each of the fire-extinguishing members 62 filled with the fire-extinguishing fluid in this way may melt at a temperature of 100 °C to 150 °C if an event (e.g., a fire) occurs in the secondary battery 100, such that the fire-extinguishing fluid therein may flow out and extinguish the fire at an early stage, thereby providing the secondary battery 100 with improved safety.

In an implementation, each of the fire-extinguishing members 62 may include the polyhedral shell 62c that may include, e.g., low-density polyethylene (LDPE), high-density polyethylene (HDPE), or ultra-high molecular weight polyethylene (UHMWPE), and may include any material that may melt at a temperature of 100 °C to 150 °C and does not cause problems due to reaction with an electrolyte.

In an implementation, the secondary battery according to an embodiment of the present disclosure may include the fire-extinguishing member filled with a fire-extinguishing fluid therein, such that when an event occurs in the secondary battery, any internal fire may be directly extinguished, thereby improving the stability of the battery.

By way of summation and review, a secondary battery may include, e.g., an electrode assembly including a cathode and an anode, a case accommodating the electrode assembly, an electrode terminal connected to the electrode assembly, or the like.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery comprising:
an electrode assembly;
a case in which the electrode assembly is accommodated;
a cap assembly covering an opening of the case; and
a fire-extinguishing member accommodated inside the case, the fire-extinguishing member in contact with the cap assembly.

2. The secondary battery as claimed in claim 1, wherein:
the cap assembly includes:
a cap plate; and
an insulating member between the cap plate and the electrode assembly, a fire-extinguishing fluid inlet is in one area of the cap plate, and
the fire-extinguishing fluid inlet is in communication with the fire-extinguishing member.

3. The secondary battery as claimed in claim 2, wherein the fire-extinguishing member is accommodated inside the case by passing through the insulating member.

4. The secondary battery as claimed in any one of claims 1 to 3, wherein the fire-extinguishing member includes a tubular shell.

5. The secondary battery as claimed in claim 4, wherein the tubular shell includes low-density polyethylene, high-density polyethylene, or ultra-high molecular weight polyethylene.

6. The secondary battery as claimed in any one of claims 1 to 5, wherein the fire-extinguishing member is filled with a fire-extinguishing fluid.

7. The secondary battery as claimed in claim 6, wherein the fire-extinguishing fluid includes a filling agent and a fire-extinguishing capsule.

8. The secondary battery as claimed in claim 7, wherein the filling agent includes silica, calcium carbonate, melamine, carbon black, calcium sulfate, barium sulfate, barium carbonate, strontium carbonate, magnesium carbonate, strontianite, iron oxide, aluminium oxide, magnesium hydroxide, aluminium hydroxide, diatomaceous earth, talc, wollastonite, semi-hardened clay, gypsum, clay, kaolin, barite, wolframite, or silicate.

9. A secondary battery comprising:
an electrode assembly;
a case in which the electrode assembly is accommodated;
a cap plate covering an opening of the case;
an insulating member between the electrode assembly and the cap plate; and
at least one fire-extinguishing member between the insulating member and the cap plate.

10. The secondary battery as claimed in claim 9, wherein:
a fire-extinguishing fluid inlet is in one area of the cap plate, and
the fire-extinguishing fluid inlet is in communication with the fire-extinguishing member.

11. The secondary battery as claimed in claim 9 or claim 10, wherein the fire-extinguishing member includes a polyhedral shell.

12. The secondary battery as claimed in claim 11, wherein an opening corresponding to the fire-extinguishing fluid inlet is on one surface of the polyhedral shell.

13. The secondary battery as claimed in any one of claims 9 to 12, wherein the fire-extinguishing member includes a fire-extinguishing fluid.

14. The secondary battery as claimed in claim 13, wherein the fire-extinguishing fluid includes a filling agent and a fire-extinguishing capsule.

15. The secondary battery as claimed in claim 14, wherein the fire-extinguishing capsule includes a core-shell structure.
